# EUROPEAN PATENT APPLICATION

(11) **EP 1 898 217 A2**
(43) Date of publication of application: **12.03.2008**
(21) Application number: 07016295.3
(22) Date of filing: 20.08.2007
(51) Int. Cl.: G01N 35/00

(54) **Sample transport rack**

(30) Priority: 07.09.2006 JP 2006242307
(71) Applicant: Hitachi High-Technologies Corporation, Tokyo 105-8717 (JP)
(72) Inventor: Watari, Shigenori, Hitachinaka-shi Iberaki 312-8504 (JP)
(74) Representative: Strehl Schübel-Hopf & Partner

(57) **Abstract**

The present invention provides a sample transport rack that is capable of steadily transmitting information stored in an RFID tag or another storage medium to an analyzer, sample pretreatment apparatus, or another apparatus when the RFID tag or another storage medium is attached to a sample cup mounted in the sample transport rack. The information stored in an information storage medium attached to the sample cup, which is mounted in the sample transport rack, is transmitted to an automated analyzer that uses the sample transport rack by a storage medium transmission/reception coil of the information storage medium, a sample transmission/reception coil of the sample transport rack, an apparatus transmission/reception coil, and an apparatus side transmission/reception coil of the automated analyzer.

## Description

### BACKGROUND OF THE INVENTION

### 1. Field of the Invention

The present invention relates to a sample transport rack that is used to retain a sample cup and move a sample inside an analyzer or sample pretreatment apparatus, between apparatuses, and in a sample transport system.

### 2. Description of the Related Art

The sample transport rack is generally used to retain a test tube, microcup, blood collection tube, or other sample cup and move a sample and sample cups inside an analyzer or sample pretreatment apparatus, between the analyzer and sample pretreatment apparatus or other device, or in a sample transport system. In the past, a bar code was attached to a lateral surface of the sample cup as means for managing the ID of each stored sample (refer, for instance, to JP-A-2003-294764). In recent years, however, a method for managing the ID or other information about a sample by attaching an RFID tag or other IC-based storage medium to or incorporating it into the sample cup has been studied. A mechanism for reading the ID or other sample information, which was attached to the sample cup, was provided in the analyzer or sample pretreatment apparatus for the purpose of recognizing the ID of each sample. This mechanism directly read the ID or other sample information from a storage medium that was mounted in the sample cup. Alternatively, a storage medium for storing the ID or other sample information was mounted or built in the sample transport rack to temporarily store the ID or other sample information about each transported sample and cause the analyzer or sample pretreatment apparatus read such temporarily stored information.

### SUMMARY OF THE INVENTION

A test tube, microcup, or blood collection tube is generally used as the sample cup. In most cases, the sample cup is basically cylindrical in shape. The bar code was attached to the lateral surface of a test tube or blood collection tube because it is thin and freely flexible. Even when the sample cup was mounted in the sample transport rack and transported, bar code information was optically read through a gap provided in the sample transport rack because the bar code was attached to the lateral surface of the sample cup.

However, an RFID tag or other information storage medium having an electronic circuit that uses an electromagnetic wave or the like is not suitable for use with the sample cup. The reason is that the RFID tag, which has a long reading distance, is significantly affected by nearby water as it absorbs the electromagnetic wave. It is therefore preferable that a 13.5 MHz band RFID tag unsusceptible to water be used with the sample cup.

However, when the 13.5 MHz band RFID tag is used, the permissible reading distance, that is, the maximum distance permitted between the information storage medium and a read/write mechanism mounted in the apparatus, is short. Therefore, when the 13.5 MHz band RFID tag is attached to the lateral surface of a test tube, it is difficult to steadily acquire information because the reading distance varies depending on vibration caused by sample transport rack movement or test tube orientation or other RFID tag mounting condition. This problem might be avoided by attaching the 13.5 MHz band RFID tag to the bottom surface of a test tube, which does not significantly sway. However, when the test tube to which the 13.5 MHz band RFID tag is attached is mounted in a conventional sample transport rack, the information cannot be read because the bottom surface of the test tube is hidden by the sample transport rack.

An object of the present invention is to provide a sample transport rack that is capable of steadily transmitting information stored in an RFID tag or another storage medium to an analyzer, sample pretreatment apparatus, or another apparatus when the RFID tag or another storage medium is attached to a sample cup mounted in the sample transport rack.
(1) To accomplish the above object, according to one aspect of the present invention, there is provided a sample transport rack that retains a sample cup in which a sample is stored and that is used to move the sample. The sample transport rack includes information transmission means for transmitting information stored in an information storage medium attached to the sample cup, which is mounted in the sample transport rack, to a device that uses the sample transport rack, and transmitting information created by the device to the information storage medium.
   Since the sample transport rack is configured as described above, it is capable of steadily transmitting information stored in an RFID tag or another storage medium to an analyzer, sample pretreatment apparatus, or another apparatus when the RFID tag or another storage medium is attached to the sample cup mounted in the sample transport rack.
(2) According to another aspect of the present invention, there is provided the sample transport rack as described in (1) above, wherein the information transmission means uses an electromagnetic wave or magnetism.
(3) According to still another aspect of the present invention, there is provided the sample transport rack as described in (1) above, wherein the information transmission means is an electrical contact that is electrically coupled to the information storage medium and the device.

The present invention makes it possible to steadily transmit information stored in an RFID tag or another storage medium to an analyzer, sample pretreatment apparatus, or other apparatus when the RFID tag or another storage medium is attached to a sample cup mounted in a sample transport rack.

### BRIEF DESCRIPTION OF THE DRAWINGS

Fig. 1 is a perspective view illustrating the external configuration of a sample transport rack according to an embodiment of the present invention.
Fig. 2 is a perspective view illustrating the internal configuration of the sample transport rack according to an embodiment of the present invention.
Fig. 3 is a block diagram illustrating an analysis system that uses the sample transport rack according to an embodiment of the present invention.
Fig. 4 is a block diagram illustrating an analysis system that uses the sample transport rack according to another embodiment of the present invention.

### DETAILED DESCRIPTION OF THE PREFERRED EMBODIMENTS

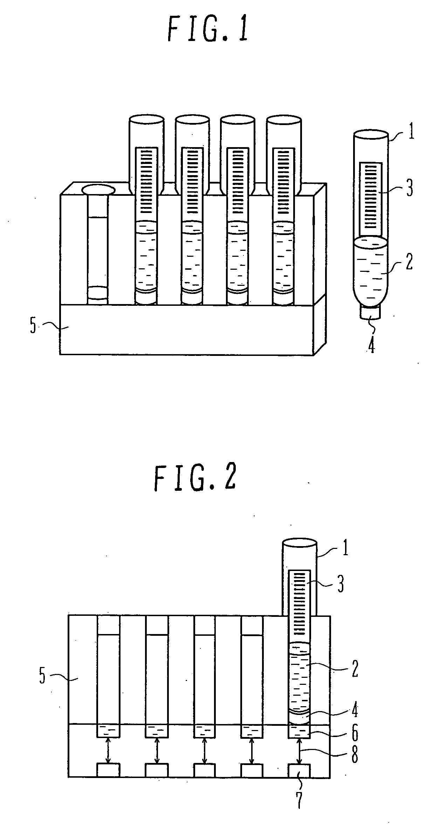

The configuration of a sample transport rack according to an embodiment of the present invention will now be described with reference to Figs. 1 to 3.

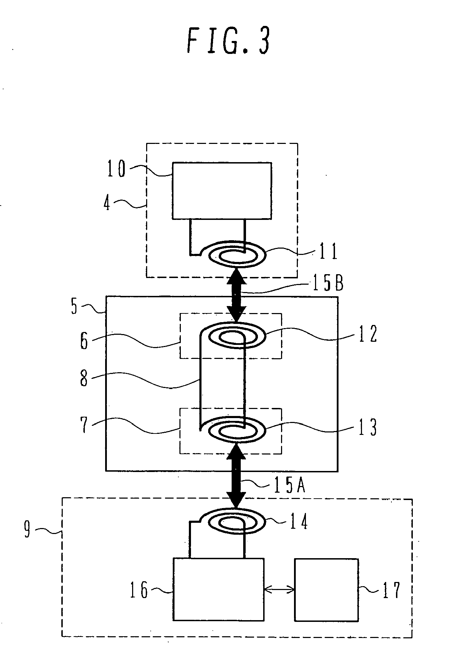

Fig. 1 is a perspective view illustrating the external configuration of the sample transport rack according to an embodiment of the present invention. Fig. 2 is a perspective view illustrating the internal configuration of the sample transport rack according to an embodiment of the present invention. Fig. 3 is a block diagram illustrating an analysis system that uses the sample transport rack according to an embodiment of the present invention. In Figs. 1 to 3, like reference numerals represent like elements.

As shown in Fig. 1, a sample cup 1 is typically a test tube. A microcup and a blood collection tube are also sample cups. A sample 2 is stored inside the sample cup 1. An information storage medium 4, which is typically an RFID tag, is attached to the outer bottom surface of the sample cup 1. The information storage medium 4 can store, for instance, an ID for sample identification and reagent information necessary for analysis. In general, a bar code 3 is attached to the sample cup 1 for use with an analyzer to permit sample identification. However, the sample cup 1 to which the information storage medium 4 is attached is mounted in the sample transport rack 5 according to the present embodiment.

As shown in Fig. 2, the sample transport rack 5 is provided with a sample transmission/reception section 6 and an apparatus transmission/reception section 7. The sample transmission/reception section 6 is mounted on the bottom surface of the sample cup 1. The apparatus transmission/reception section 7 is mounted on the bottom surface of the sample transport rack 5. The sample transmission/reception section 6 and the apparatus transmission/reception section 7 are coupled via an information transmission path 8.

An operation of the sample transport rack 5 according to the present embodiment will now be described with reference to Fig. 3. An analyzer 9 includes an apparatus side transmission/reception circuit 16. The apparatus side transmission/reception circuit 16 is controlled by an information processing apparatus 17 to drive an apparatus side transmission/reception coil 14 and generate or receive an electromagnetic wave or alternating magnetic force.

The apparatus transmission/reception section 7 of the sample transport rack 5 includes an apparatus transmission/reception coil 13. The apparatus transmission/reception coil 13 is coupled electromagnetically or magnetically to the apparatus side transmission/reception coil 14 as indicated by an arrow mark 15A.

The sample transmission/reception section 6 in the sample transport rack 5 includes a sample transmission/reception coil 12. The sample transmission/reception coil 12 is electrically coupled to the apparatus side transmission/reception coil 14 via the information transmission path 8. The sample transmission/reception coil 12 is coupled electromagnetically or magnetically to a storage medium transmission/reception coil 11 of the information storage medium 4 as indicated by an arrow mark 15B.

A storage circuit 10 of the information storage medium 4 is electrically coupled to the storage medium transmission/reception coil 11.

Since the configuration is as described above, the information transmitted from the apparatus side transmission/reception circuit 16 reaches the storage circuit 10 through the apparatus side transmission/reception coil 14, apparatus transmission/reception coil 13, sample transmission/reception coil 12, and storage medium transmission/reception coil 11. The information can then be stored in the storage circuit 10. Further, the information stored in the storage circuit 10 can be transmitted to the apparatus side transmission/reception circuit 16 along a path that is the reverse of the aforementioned path.

Even when an RFID tag having a short permissible reading distance is attached to a test tube, microcup, blood collection tube, or another sample cup, which is mounted in a sample transport rack for retaining and moving the sample cup, the present embodiment makes it possible to steadily obtain information by preventing the reading distance from varying depending on vibration caused by sample transport rack movement or test tube orientation or another RFID tag mounting condition. Consequently, the present embodiment ensures that the information stored in the RFID tag or another storage medium can be steadily transmitted to an analyzer, sample pretreatment apparatus, or another apparatus.

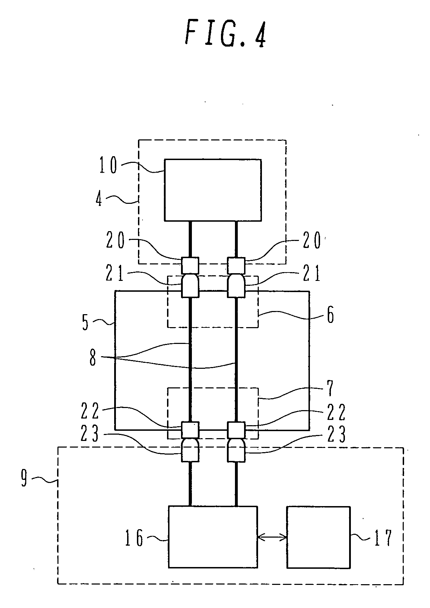

The configuration of the sample transport rack according to another embodiment of the present invention will now be described with reference to Fig. 4.

Fig. 4 is a block diagram illustrating an analysis system that uses the sample transport rack according to another embodiment of the present invention. In Figs. 1 to 4, like reference numerals represent like elements.

The sample transport rack 5 according to the present embodiment is provided with the sample transmission/reception section 6 and the apparatus transmission/reception section 7. The sample transmission/reception section 6 is mounted on the bottom surface of the sample cup 1. The apparatus transmission/reception section 7 is mounted on the bottom surface of the sample transport rack 5. The sample transmission/reception section 6 and the apparatus transmission/reception section 7 are coupled via the information transmission path 8.

The analyzer 9 includes the apparatus side transmission/reception circuit 16. The apparatus side transmission/reception circuit 16 is controlled by the information processing apparatus 17 to drive an apparatus side contact 23 and generate an electrical signal. The apparatus transmission/reception section 7 of the sample transport rack 5 includes an apparatus contact 22. The apparatus contact 22 and apparatus side contact 23 can be electrically coupled to or decoupled from each other.

The sample transmission/reception section 6 includes a sample contact 21. The sample contact 21 and apparatus side contact 22 are electrically coupled via the information transmission path 8. Meanwhile, the information storage medium 4 includes a storage medium contact 20. The sample contact 21 can be electrically coupled to or decoupled from the storage medium contact 20 in the information storage medium 4. The storage circuit 10 is electrically coupled to the storage medium contact 20.

Since the configuration is as described above, the information transmitted from the apparatus side transmission/reception circuit 16 reaches the storage circuit 10 through the apparatus side contact 23, apparatus contact 22, sample contact 21, and storage medium contact 20. The information can then be stored in the storage circuit 10. Further, the information stored in the storage circuit 10 can be transmitted to the apparatus side transmission/reception circuit 16 along a path that is the reverse of the aforementioned path.

Even when an RFID tag having a short permissible reading distance is attached to a test tube, microcup, blood collection tube, or another sample cup, which is mounted in a sample transport rack for retaining and moving the sample cup, the present embodiment makes it possible to steadily obtain information by preventing the reading distance from varying depending on vibration caused by sample transport rack movement or test tube orientation or another RFID tag mounting condition. Consequently, the present embodiment ensures that the information stored in the RFID tag or another storage medium can be steadily transmitted to an analyzer, sample pretreatment apparatus, or another apparatus.

## Claims

1. A sample transport rack for retaining a sample cup in which a sample is stored and moving the sample, the sample transport rack comprising:
information transmission means for transmitting information stored in an information storage medium attached to the sample cup, which is mounted in said sample transport rack, to a device which uses the sample transport rack, and for transmitting information created by said device to said information storage medium.

2. The sample transport rack according to claim 1, wherein said information transmission means uses an electromagnetic wave or magnetism.

3. The sample transport rack according to claim 1, wherein said information transmission means is an electrical contact that is electrically coupled to said information storage medium and said device.
